# FASCICULE DE BREVET EUROPEEN

(11) **EP 4 029 783 B1**
(45) Date de publication et mention de la délivrance du brevet: **20.12.2023**
(21) Numéro de dépôt: 22151601.6
(22) Date de dépôt: 14.01.2022
(51) Int. Cl.: B64D 29/08, F02K 1/64, F02C 7/28

(54) **TURBORÉACTEUR D'AÉRONEF COMPORTANT DEUX MODULES D'INVERSION DE POUSSÉE**
TRIEBWERK EINES LUFTFAHRZEUGS MIT ZWEI SCHUBUMKEHRMODULEN
TURBOJET ENGINE OF AN AIRCRAFT COMPRISING TWO THRUST REVERSER MODULES

(30) Priorité: 19.01.2021 FR 2100470
(43) Date de publication de la demande: 20.07.2022
(73) Titulaire: AIRBUS OPERATIONS, 31060 Toulouse Cedex 9 (FR)
(72) Inventeur: LESCOUP, Jérôme, 31060 TOULOUSE (FR)
(74) Mandataire: Cabinet Le Guen Maillet

(56) Documents cités:
- EP-A1- 3 628 597
- US-A1- 2017 362 957
- US-A1- 2018 156 131
- US-A1- 2021 003 097

## Description

### DOMAINE TECHNIQUE

La présente invention concerne un turboréacteur d'aéronef comportant deux modules d'inversion de poussée et un système de fixation entre deux caissons de chaque module, ainsi qu'un aéronef comportant un tel turboréacteur.

### ÉTAT DE LA TECHNIQUE ANTÉRIEURE

La Fig. 1 montre un aéronef 100 qui comporte classiquement un turboréacteur 150 qui permet de générer une poussée pour faire avancer ledit aéronef 100. Lorsque l'aéronef 100 doit freiner, il est connu d'utiliser des modules d'inversion de poussée 152 qui font partie du turboréacteur 150 et qui génèrent une poussée inverse à la direction d'avancement de l'aéronef 100 pour le ralentir. Il y a un module d'inversion de poussée 152 à bâbord et un à tribord.

La Fig. 2 est une représentation schématique en vue de face des modules d'inversion de poussée 152.

Le turboréacteur 150 et les modules d'inversion 152 comportent une veine secondaire 208 dans laquelle, un flux secondaire d'air circule de l'avant vers l'arrière de l'aéronef 100.

Chaque module d'inversion 152 comporte des portes d'inversion qui sont montées mobiles sur la structure dudit module d'inversion 152 et qui prennent alternativement une position escamotée ou une position déployée. En position escamotée, les portes d'inversion ne sont pas en travers de la veine secondaire 208 et ne font pas obstacle à l'écoulement du flux secondaire. En position déployée, les portes d'inversion sont en travers de la veine secondaire 208 et font obstacle à l'écoulement du flux secondaire. Le flux secondaire est alors dirigé vers l'extérieur et vers l'avant du turboréacteur 150 pour générer une poussée ralentissant l'aéronef 100.

Chaque module d'inversion 152 comporte un caisson intérieur 202 et un caisson extérieur 204. Les caissons 202 et 204 prennent chacun globalement la forme d'un demi-cylindre centré sur une direction longitudinale X du module d'inversion 152 correspondant à une direction longitudinale du turboréacteur 150.

Pour des raisons de maintenance, les deux modules d'inversion 152 sont montés articulés sur une structure du turboréacteur 150 et chaque module d'inversion 152 est mobile en rotation autour d'un axe horizontal 52 disposé en partie haute du turboréacteur 150.

Les caissons intérieurs 202 délimitent un volume intérieur 206 dans lequel est logé le coeur du turboréacteur 150. La veine secondaire 208 est délimitée entre chaque caisson intérieur 202 et le caisson extérieur 204 correspondant.

Afin de fixer les deux caissons 202 et 204 l'un à l'autre et de manière concentrique, il est connu de disposer des systèmes de fixation 210 qui s'étendent radialement par rapport à la direction longitudinale X. En particulier, il est connu d'utiliser un système de fixation 210 qui est disposé à 6 heures dans une zone appelée « bifurcation inférieure » et qui prend globalement la forme d'une poutre s'étendant dans un plan vertical XZ.

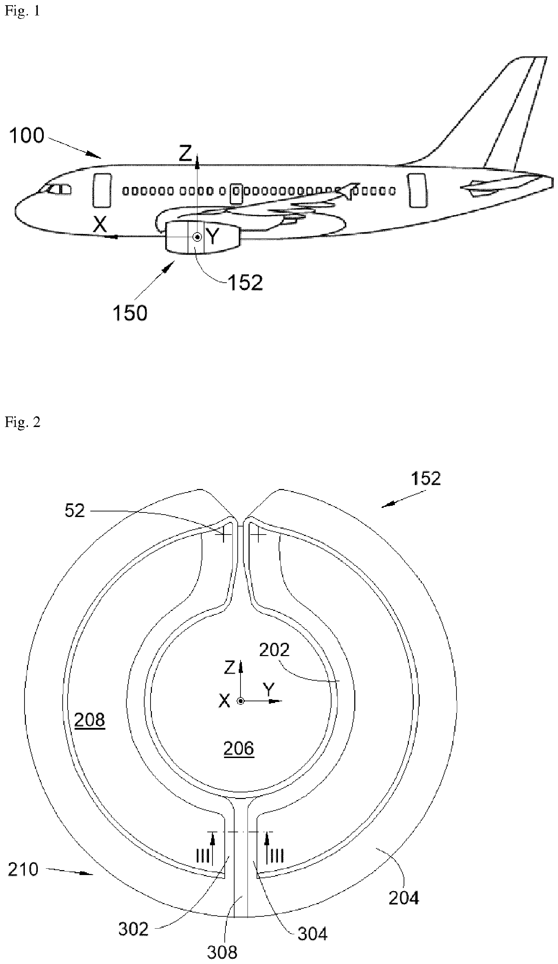

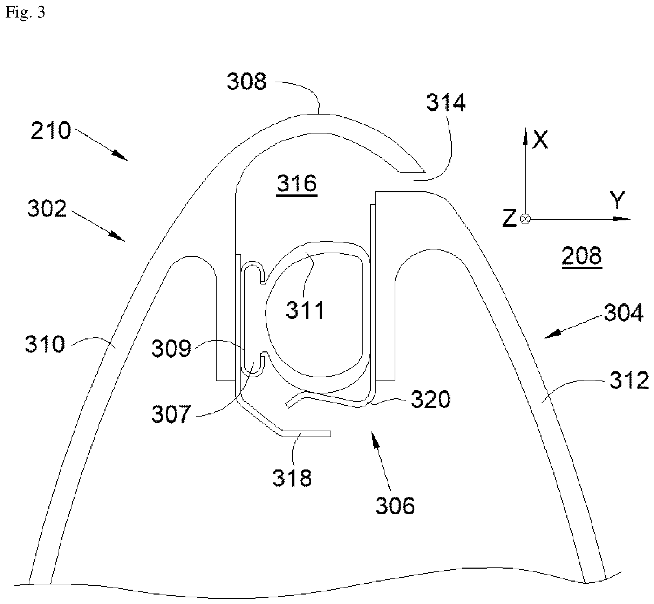

La Fig. 3 montre un système de fixation 210 de l'état de la technique en coupe selon la ligne III-III de la Fig. 2 et dans la veine secondaire 208.

Lors de la maintenance du turboréacteur 150, les deux modules d'inversion 152 sont écartés par un technicien et le système de fixation 210 s'ouvre afin de vérifier les composants qui sont logés dans ledit système de fixation 210. À cette fin, le système de fixation 210 comporte un capot bâbord 302 fixé entre le caisson intérieur 202 et le caisson extérieur 204 du module d'inversion 152 à bâbord, et un capot tribord 304 fixé entre le caisson intérieur 202 et le caisson extérieur 204 du module d'inversion 152 à tribord.

En position de fonctionnement (Fig. 3), le capot tribord 304 et le capot bâbord 302 sont maintenus l'un contre l'autre.

Le capot bâbord 302 présente ici un bord d'attaque 308 qui fait face au flux secondaire et qui se prolonge sur l'un de ses côtés par un flanc bâbord 310 s'étendant vers l'arrière du turboréacteur 150. Le bord d'attaque 308 s'étend ici globalement parallèlement à la direction verticale Z.

Le capot tribord 304 comporte ici uniquement un flanc tribord 312.

Lorsque le capot bâbord 302 et le capot tribord 304 sont en position de fonctionnement, le flanc tribord 312 prolonge le bord d'attaque 308 sur l'autre de ses côtés, et un canal 314 est présent entre le capot bâbord 302 et le flanc tribord 312.

Pour assurer la jonction des deux capots 302 et 304, il est prévu un joint 306, du type joint en élastomère, qui est fixé à l'un des capots, ici le capot bâbord 302, et contre lequel l'autre capot, ici le capot tribord 304 vient en appui.

Le joint 306 se trouve dans un logement 316 ménagé à l'intérieur du système de fixation 210, globalement entre le flanc bâbord 310 et le flanc tribord 312. Le logement 316 est en communication fluidique avec le canal 314.

Le joint 306 comporte un pied 307 et un boudin 311 solidaire du pied 307 et le système de fixation 210 comporte un sabot 309 qui est fixé au capot bâbord 302 dans un plan vertical XZ et dans lequel le pied 307 est maintenu. Le pied 307 est ainsi fixé dans un plan vertical XZ et le boudin 311 se projette depuis le pied 307 selon une direction transversale Y qui est perpendiculaire au plan vertical XZ.

Le joint 306 assure l'étanchéité pour les fluides et le feu entre l'intérieur du système de fixation 210 et la veine secondaire 208. Pour compléter cette étanchéité, il est connu de réaliser des labyrinthes à l'aide de lamelles métalliques.

Le système de fixation 210 comporte ici, une première lamelle 318 fixée à l'intérieur du capot bâbord 302 et une deuxième lamelle 320 fixée à l'intérieur du capot tribord 304. Les deux lamelles 318 et 320 sont courbées l'une vers l'autre en aval du joint 306 par rapport au canal 314.

Du fait des tolérances de fabrication et de montage des modules d'inversion 152 sur la structure du turboréacteur 150 et du fait des déplacements en vol du capot bâbord 302 et du capot tribord 304 l'un par rapport à l'autre, les efforts s'appliquent principalement parallèlement à la direction transversale Y. Le joint se déplace donc principalement selon la direction transversale Y et il est nécessaire de prévoir un joint robuste, c'est-à-dire présentant un diamètre important afin d'assurer l'étanchéité et sa durée de vie.

Cette robustesse du joint nécessite des efforts importants pour fermer les capots et il est donc souhaitable de trouver un nouvel arrangement pour le système de fixation.

Un turboréacteur pour aéronef selon l'art antérieur est connu du document US 2018/156131.

### EXPOSÉ DE L'INVENTION

Un objet de la présente invention est de proposer un turboréacteur d'aéronef comportant deux modules d'inversion de poussée et comportant un système de fixation entre un caisson intérieur et un caisson extérieur de chaque module d'inversion de poussée, où le système de fixation comporte un capot bâbord et un capot tribord entre lesquels est disposé un joint qui subit moins de déformation et où l'effort nécessaire au serrage des capots est réduit.

À cet effet, est proposé un turboréacteur d'un aéronef présentant une direction longitudinale et une direction transversale perpendiculaire à la direction longitudinale et comportant :
- une structure,
- deux modules d'inversion de poussée montés articulés sur la structure entre une position rapprochée et une position écartée,
   où chaque module d'inversion de poussée comporte un caisson extérieur prenant globalement la forme d'un demi-cylindre centré sur la direction longitudinale, un caisson intérieur prenant globalement la forme d'un demi-cylindre centré sur la direction longitudinale, logé à l'intérieur du caisson extérieur, et
- un système de fixation assurant, pour chaque module d'inversion de poussée, la fixation du caisson intérieur au caisson extérieur, et comportant :
- un premier capot fixé entre le caisson intérieur et le caisson extérieur de l'un des modules d'inversion, et présentant un bord d'attaque,
- un deuxième capot fixé entre le caisson intérieur et le caisson extérieur de l'autre des modules d'inversion,
   où un logement est ménagé entre le premier capot et le deuxième capot et délimité par une paroi de fixation du premier capot s'étendant perpendiculairement à la direction longitudinale à l'arrière du bord d'attaque,
- un joint comportant un pied et un boudin solidaire du pied, où le pied est fixé dans le logement à la paroi de fixation et où le boudin se projette depuis le pied selon la direction longitudinale, et
un moyen d'écrasement solidaire du deuxième capot et agencé pour écraser le boudin vers la paroi de fixation lorsque le deuxième capot passe de la position écartée à la position rapprochée.

Avec un tel arrangement, le boudin subit principalement des efforts selon la direction longitudinale. En conséquence, le boudin se déplace principalement selon la direction longitudinale, limitant ainsi les déplacements selon la direction transversale Y dus aux tolérances de fabrication et de montage et aux déplacements en vol, limitant également d'autant les cisaillements au niveau de son pied. Cet avantage permet de réduire le diamètre du joint et donc les efforts à appliquer lors de la fermeture des capots.

Selon un mode de réalisation particulier, le système de fixation comporte en outre, une première lamelle élastique avec une première extrémité fixée dans le logement au premier capot, une deuxième extrémité libre et se projetant vers le deuxième capot, et, entre la première extrémité et la deuxième extrémité, une zone plane globalement parallèle à la paroi de fixation, où le boudin est en appui contre la zone plane, et le moyen d'écrasement est un moyen de poussée solidaire du deuxième capot et agencé pour déplacer la zone plane vers la paroi de fixation lorsque le deuxième capot passe de la position écartée à la position rapprochée.

Selon un mode de réalisation particulier, le moyen de poussée est une deuxième lamelle avec une première extrémité fixée dans le logement au deuxième capot, une deuxième extrémité libre se projetant vers le premier capot et, entre la première extrémité et la deuxième extrémité, une zone plane globalement parallèle à la paroi de fixation, où en position écartée, la première lamelle est dans une position de repos, où la zone plane de la deuxième lamelle est au niveau ou en avant de la zone plane de la première lamelle, où en position rapprochée, la première lamelle est dans une position active dans laquelle elle est rapprochée de la paroi de fixation par rapport à la position de repos, et la zone plane de la deuxième lamelle est positionnée derrière et contre la zone plane de la première lamelle par rapport au boudin.

Avantageusement, la deuxième extrémité de la première lamelle est courbée vers la paroi de fixation et la deuxième extrémité de la deuxième lamelle est courbée à l'opposé de la paroi de fixation.

Selon un autre mode de réalisation particulier, le moyen de poussée est une deuxième lamelle avec une première extrémité fixée dans le logement au deuxième capot, une deuxième extrémité libre se projetant vers le premier capot et vers l'arrière du module d'inversion, et, entre la première extrémité et la deuxième extrémité, une zone plane qui présente un angle aigu par rapport à la paroi de fixation, où en position écartée, la première lamelle est dans une position de repos, où en position rapprochée, la première lamelle est dans une position active dans laquelle elle est rapprochée de la paroi de fixation par rapport à la position de repos, et où la zone plane de la deuxième lamelle est positionnée de manière à entrer en contact avec la deuxième extrémité de la première lamelle lors du passage de la position écartée à la position rapprochée.

Avantageusement, la deuxième extrémité de la première lamelle est courbée vers la paroi de fixation.

Selon un mode de réalisation particulier, le moyen d'écrasement est une lamelle dont une première extrémité est fixée dans le logement à l'intérieur de la deuxième paroi du deuxième capot et dont une deuxième extrémité est libre et se projette vers la première paroi du premier capot, la deuxième extrémité est courbée à l'opposé de la paroi de fixation, et en position écartée, la deuxième extrémité se positionne en regard du boudin.

Avantageusement, un plan de symétrie du boudin est décalé vers le premier capot par rapport à un plan de symétrie du pied.

L'invention propose également un aéronef comportant un turboréacteur selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef,
Fig. 2 est une représentation schématique en vue de face des modules d'inversion d'un turboréacteur,
Fig. 3 est une vue en coupe selon la ligne III-III de la Fig. 2, d'un système de fixation de l'état de la technique,

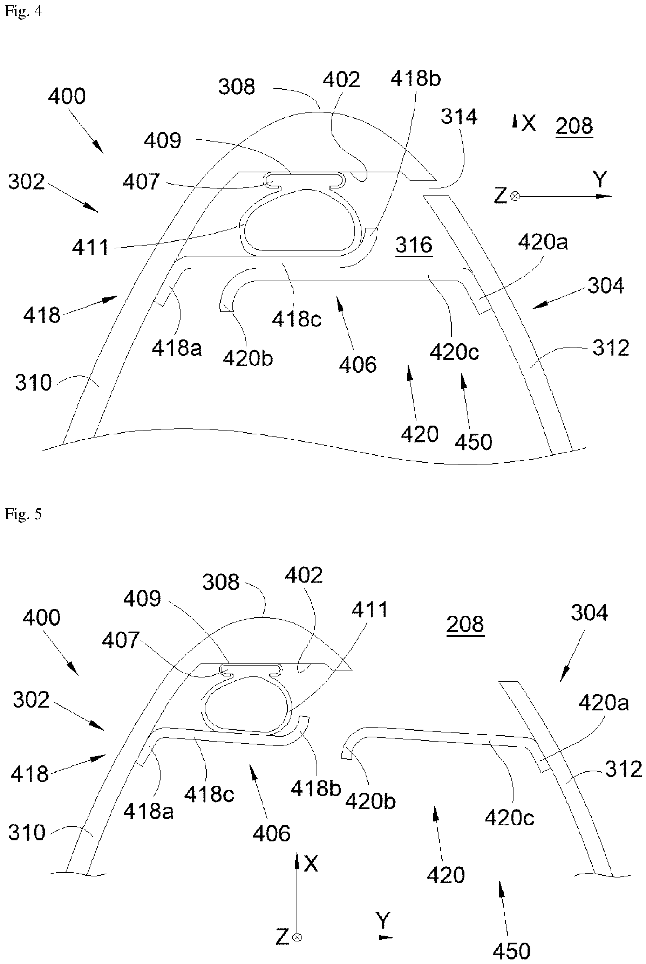

Fig. 4 montre une vue similaire à la vue de la Fig. 3 pour un système de fixation selon un premier mode de réalisation de l'invention,
Fig. 5 montre le système de fixation de la Fig. 4 en position ouverte,

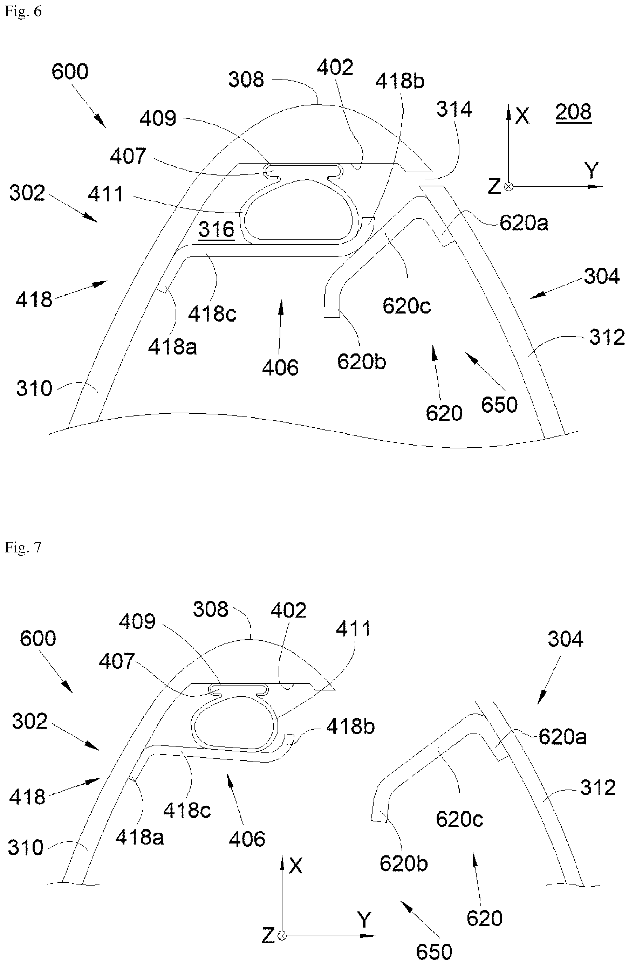

Fig. 6 montre une vue similaire à la vue de la Fig. 3 pour un système de fixation selon un deuxième mode de réalisation de l'invention,
Fig. 7 montre le système de fixation de la Fig. 6 en position ouverte,

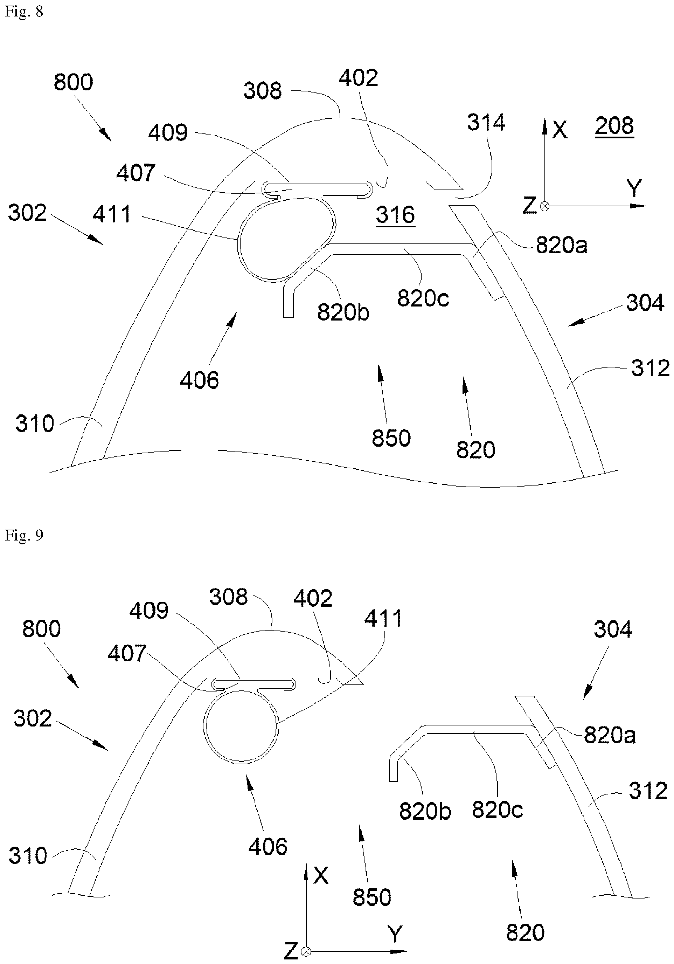

Fig. 8 montre une vue similaire à la vue de la Fig. 3 pour un système de fixation selon un troisième mode de réalisation de l'invention, et
Fig. 9 montre le système de fixation de la Fig. 8 en position ouverte.

### EXPOSÉ DÉTAILLÉ DE MODES DE RÉALISATION

La Fig. 1 et la Fig. 2 sont identiques dans le cas de l'invention et dans le cas de l'état de la technique, les seules différences entre l'objet de l'invention et l'état de la technique résident dans la structure du système de liaison et ces différences ne sont visibles que dans les vues en coupe qui sont représentées aux Figs. 4 et 5 pour un premier mode de réalisation de l'invention, aux Figs. 6 et 7 pour un deuxième mode de réalisation de l'invention et aux Figs. 8 et 9 pour un troisième mode de réalisation de l'invention. De ce fait, les éléments communs à l'invention et à l'état de la technique portent les mêmes références.

L'aéronef 100 comporte un turboréacteur 150 présentant deux modules d'inversion de poussée 152 qui sont équipés de moyens, tels que des portes d'inversion, permettant de dévier le flux secondaire vers l'extérieur et vers l'avant du turboréacteur 150 pour ralentir l'aéronef 100. Il y a un module d'inversion de poussée 152 à bâbord et un à tribord qui sont montés articulés sur une structure du turboréacteur 150 entre une position rapprochée de vol et une position écartée pour maintenance. Le déplacement de chaque module d'inversion de poussée 152 est une rotation autour d'un axe horizontal 52.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du turboréacteur et par rapport à la direction d'avancement de l'aéronef 100 lorsque le turboréacteur 152 fonctionne.

Dans la description qui suit, et par convention, on appelle X la direction longitudinale des modules d'inversion qui est confondue avec la direction longitudinale X du turboréacteur et orientée vers l'avant de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Chaque module d'inversion 152 comporte un caisson intérieur 202 et un caisson extérieur 204. Les deux caissons 202 et 204 prennent chacun globalement la forme d'un demi-cylindre centré sur la direction longitudinale X du module d'inversion 152. Le caisson intérieur 202 est logé à l'intérieur du caisson extérieur 204 et chaque caisson 202, 204 est fixé à une structure du module d'inversion 152. La structure du module d'inversion 152 peut être une partie de l'un ou l'autre des caissons 202, 204.

Les caissons intérieurs 202 délimitent un volume intérieur 206 dans lequel est logé le coeur du turboréacteur 150. La veine secondaire 208 est délimitée entre chaque caisson intérieur 202 et le caisson extérieur 204 correspondant.

Au niveau de la bifurcation inférieure, le module d'inversion 152 comporte un système de fixation 400, 600, 800 qui est représenté en coupe aux Figs. 4 à 9 et qui assure, pour chaque module d'inversion 152, la fixation des deux caissons 202 et 204 l'un à l'autre et de manière concentrique, c'est-à-dire du caisson intérieur 202 au caisson extérieur 204 du module d'inversion 152 considéré.

La Fig. 4 montre le système de fixation 400 en position rapprochée de fonctionnement et la Fig. 5 montre le système de fixation 400 en position écartée ouverte pour maintenance.

La Fig. 6 montre le système de fixation 600 en position rapprochée de fonctionnement et la Fig. 7 montre le système de fixation 600 en position écartée ouverte pour maintenance.

La Fig. 8 montre le système de fixation 800 en position rapprochée de fonctionnement et la Fig. 9 montre le système de fixation 800 en position écartée ouverte pour maintenance.

Lors de la maintenance du turboréacteur 150, les deux modules d'inversion 152 sont écartés par un technicien et le système de fixation 400, 600, 800 est ouvert (Fig. 5, Fig. 7, Fig. 9), afin de vérifier les composants qui sont logés dans ledit système de fixation 400, 600, 800. À cette fin, le système de fixation 400, 600, 800 comporte un premier capot 302, ici le capot bâbord sur les figures, fixé entre le caisson intérieur 202 et le caisson extérieur 204 de l'un des modules d'inversion 152 ici à bâbord, et un deuxième capot 304, ici le capot tribord, fixé entre le caisson intérieur 202 et le caisson extérieur 204 de l'autre module d'inversion 152 ici à tribord.

La position rapprochée correspond à la position de fonctionnement (Fig. 4, Fig. 6, Fig. 8) dans laquelle le premier capot 302 et le deuxième capot 304 sont au plus près l'un de l'autre, et la position écartée correspond à la position de maintenance (Fig. 5, Fig. 7, Fig. 9) dans laquelle le premier capot 302 et le deuxième capot 304 sont au plus loin l'un de l'autre. En position de fonctionnement, le deuxième capot 304 est maintenu fixé en position sur la structure par des moyens de fixation comme par exemple des éléments de visserie.

Comme pour l'état de la technique, le premier capot 302 présente un bord d'attaque 308 qui fait face au flux secondaire qui s'écoule parallèlement à la direction longitudinale X dans la veine secondaire 208. Le bord d'attaque 308 est ici globalement parallèle à la direction verticale Z.

Le deuxième capot 304 comporte un deuxième flanc 312 ici à tribord qui s'étend à l'arrière et sur l'un des côtés du bord d'attaque 308 et le premier capot 302 présente un premier flanc 310, ici à bâbord, solidaire du bord d'attaque 308 et qui s'étend à l'arrière et sur l'autre des côtés du bord d'attaque 308. Le premier flanc 310 prolonge le bord d'attaque 308.

Lorsque le premier capot 302 et le deuxième capot 304 sont en position de fonctionnement, le deuxième flanc 312 prolonge le bord d'attaque 308 et un canal 314 est présent entre le premier capot 302 et le deuxième flanc 312.

En position rapprochée, le premier capot 302 et le deuxième capot 304 délimitent entre eux un logement 316.

Le premier capot 302 présente à l'arrière du bord d'attaque 308, une paroi de fixation 402 qui s'étend perpendiculairement à la direction longitudinale X, c'est-à-dire parallèle au plan YZ, et qui délimite en partie le logement 316 ménagé à l'intérieur du système de fixation 400, 600, 800 entre le premier capot 302 et le deuxième capot 304 et en communication fluidique avec le canal 314.

Le système de fixation 400, 600, 800 comporte un joint 406, du type joint en élastomère, qui est fixé à la paroi de fixation 402 dans le logement 316 entre le premier flanc 310 et le deuxième flanc 312. Le joint 406 assure l'étanchéité pour les fluides et le feu entre l'intérieur du système de fixation 400, 600, 800 et la veine secondaire 208.

À cette fin, le joint 406 comporte un pied 407 et un boudin 411 solidaire du pied 407. Le joint 406 est fixé dans le logement 316 à la paroi de fixation 402 par l'intermédiaire du pied 407 et, à cette fin, le système de fixation 400, 600, 800 comporte un sabot 409 qui est fixé à la paroi de fixation 402 et dans lequel le pied 407 est maintenu.

Le pied 407 est ainsi fixé dans le plan vertical YZ perpendiculaire à la direction longitudinale X et le boudin 411 se projette vers l'arrière dans le logement 316 depuis le pied 407 selon la direction longitudinale X.

Dans chacun des modes de réalisation, le système de fixation 400, 600, 800 comporte un moyen d'écrasement 450, 650, 850 solidaire du deuxième capot 304 et agencé pour écraser le boudin 411 vers la paroi de fixation 402 lorsque le deuxième capot 304 passe de la position écartée à la position rapprochée.

Dans le premier et le deuxième modes de réalisation présentés aux Figs. 4 à 7, le système de fixation 400, 600 comporte également une première lamelle 418 élastique, en particulier une lame ressort métallique, dont une première extrémité 418a est fixée dans le logement 316 à l'intérieur de la première paroi 310 du premier capot 302 et dont une deuxième extrémité 418b est libre et se projette vers la deuxième paroi 312 du deuxième capot 304. Entre la première extrémité 418a et la deuxième extrémité 418b, la première lamelle 418 présente une zone plane 418c qui est globalement parallèle à la paroi de fixation 402.

Ainsi, selon la direction longitudinale X, le joint 406 est disposé entre la paroi de fixation 402 et la zone plane 418c et le boudin 411 est en appui contre la zone plane 418c de la première lamelle 418.

Le moyen d'écrasement 450, 650 du système de fixation 400, 600 comporte un moyen de poussée 420, 620 qui est solidaire du deuxième capot 304 et qui est agencé pour déplacer la zone plane 418c vers la paroi de fixation 402 lorsque le deuxième capot 304 passe de la position écartée à la position rapprochée, c'est-à-dire lorsque le deuxième capot 304 se déplace globalement parallèlement à la direction transversale Y du fait des dimensions du turboréacteur 150. L'action du moyen de poussée 420, 620 sur la première lamelle 418 tend à déformer de manière élastique ladite première lamelle 418, en particulier au niveau de la jonction entre la première extrémité 418a et la zone plane 418c.

Ainsi, la zone plane 418c se déplace principalement parallèlement à la direction longitudinale X, et le boudin 411 est également comprimé selon la direction longitudinale X. Même si lors de son déplacement, le deuxième capot 304 présente des déplacements parasites parallèlement à la direction longitudinale X, ces déplacements s'ajoutent aux déplacements engendrés par le moyen de poussée 420, 620 qui sont dans la même direction et il n'y a alors aucun effort de sectionnement perpendiculairement à la direction longitudinale X au niveau de la zone de jonction du boudin 411 sur le pied 407 et ainsi le joint 406 est préservé.

En outre, le joint 406 peut avoir une taille réduite puisqu'il n'est sollicité que selon la direction longitudinale, de fait indépendante de la direction transversale Y selon laquelle s'appliquent les tolérances de fabrication et de montage ainsi que les déplacements en vol, ce qui facilite le passage vers la position rapprochée.

En position écartée, la première lamelle 418 est dans une position de repos et est soumise à la pression exercée par le boudin 411

En position rapprochée, la première lamelle 418 est dans une position active dans laquelle elle est rapprochée de la paroi de fixation 402 par rapport à la position de repos et comprime le boudin 411.

Dans le mode de réalisation de l'invention de la Fig. 4 et de la Fig. 5, le moyen de poussée 420 prend la forme d'une deuxième lamelle 420 élastique ou rigide, en particulier par exemple une lame métallique, dont une première extrémité 420a est fixée dans le logement 316 à l'intérieur de la deuxième paroi 312 du deuxième capot 304 et dont une deuxième extrémité 420b est libre et se projette vers la première paroi 310 du premier capot 302. Entre la première extrémité 420a et la deuxième extrémité 420b, la deuxième lamelle 420 présente une zone plane 420c qui est globalement parallèle à la paroi de fixation 402.

Lorsque la deuxième lamelle 420 est élastique et en position écartée, elle est dans une position de repos et la zone plane 420c de la deuxième lamelle 420 se positionne au niveau ou en avant de la zone plane 418c de la première lamelle 418. En position rapprochée, la deuxième lamelle 420 est dans une position active dans laquelle elle est éloignée de la paroi de fixation 402 par rapport à la position de repos et la zone plane 420c de la deuxième lamelle 420 est positionnée derrière et contre la zone plane 418c de la première lamelle 418 par rapport au boudin 411. Ainsi, lorsque le deuxième capot 304 se rapproche du premier capot 302, la zone plane 420c de la deuxième lamelle 420 vient par derrière au contact de la zone plane 418c de la première lamelle 418 et la deuxième lamelle 420 recule vers sa position active tout en poussant la première lamelle 418 vers l'avant qui avance vers sa position active.

Lorsque la deuxième lamelle 420 est rigide, elle reste dans la même position, où en position écartée, la zone plane 420c de la deuxième lamelle 420 est au niveau ou en avant de la zone plane 418c de la première lamelle 418, et où en position rapprochée, la zone plane 420c de la deuxième lamelle 420 est positionnée derrière et contre la zone plane 418c de la première lamelle 418 par rapport au boudin 411 et pousse la première lamelle 418 vers l'avant qui avance vers sa position active.

Pour faciliter le passage de la deuxième lamelle 420 derrière la première lamelle 418 lors du passage de la position écartée à la position rapprochée, la deuxième extrémité 418b de la première lamelle 418 est courbée vers la paroi de fixation 402 et la deuxième extrémité 420b de la deuxième lamelle 420 est courbée à l'opposé de la paroi de fixation 402. Ainsi, lors du déplacement de la position écartée à la position rapprochée, les deux extrémités courbées 418b et 420b glissent l'une sur l'autre pour déplacer les lamelles 418 et 420 de leurs positions de repos vers leurs positions actives.

Dans le mode de réalisation de l'invention des Figs. 6 et 7, le moyen de poussée 620 prend également la forme d'une deuxième lamelle 620 élastique ou rigide, en particulier par exemple une lame métallique, dont une première extrémité 620a est fixée dans le logement 316 à l'intérieur de la deuxième paroi 312 du deuxième capot 304 et dont une deuxième extrémité 620b est libre et se projette vers la première paroi 310 du premier capot 302 et vers l'arrière du module d'inversion 152. Entre la première extrémité 620a et la deuxième extrémité 620b, la deuxième lamelle 420 présente une zone plane 620c qui présente un angle aigu par rapport à la paroi de fixation 402. Selon un mode de réalisation particulier, l'angle est par exemple supérieur à 0° et inférieur à 70°.

Lorsque la deuxième lamelle 620 est élastique et en position écartée, elle est dans une position de repos et en position rapprochée, la deuxième lamelle 620 est dans une position active avec un angle par rapport à la paroi de fixation 402 qui est moins grand que dans la position de repos. La zone plane 620c de la deuxième lamelle 620 est positionnée de manière à entrer en contact avec la deuxième extrémité 418b de la première lamelle 418 lors du passage de la position écartée à la position rapprochée. Ainsi, lorsque le deuxième capot 304 se rapproche du premier capot 302, la zone plane 620c de la deuxième lamelle 620 vient au contact de la deuxième extrémité 418b de la première lamelle 418 et du fait de l'angle aigu, la zone plane 620c pousse la première lamelle 418 vers l'avant qui avance vers sa position active.

Lorsque la deuxième lamelle 420 est rigide, elle reste dans la même position, et la zone plane 620c de la deuxième lamelle 620 est positionnée de manière à entrer en contact avec la deuxième extrémité 418b de la première lamelle 418 lors du passage de la position écartée à la position rapprochée.

Pour faciliter le glissement de la deuxième extrémité 418b de la première lamelle 418 sur la zone plane 620c de la deuxième lamelle 620, la deuxième extrémité 418b de la première lamelle 418 est courbée vers la paroi de fixation 402.

Les lamelles 418, 420, 620 permettent en outre de créer des labyrinthes qui complètent l'étanchéité du joint 406.

Dans le troisième mode de réalisation de l'invention présenté aux Figs. 8 et 9, le moyen d'écrasement 850 du système de fixation 800 prend la forme d'une lamelle 820 élastique ou rigide, en particulier par exemple une lame métallique, dont une première extrémité 820a est fixée dans le logement 316 à l'intérieur de la deuxième paroi 312 du deuxième capot 304 et dont une deuxième extrémité 820b est libre et se projette vers la première paroi 310 du premier capot 302.

Dans le mode de réalisation de l'invention présenté ici, entre la première extrémité 820a et la deuxième extrémité 820b, la lamelle 820 présente une zone plane 820c qui est globalement parallèle à la paroi de fixation 402 et la deuxième extrémité 820b est courbée à l'opposé de la paroi de fixation 402.

En position écartée, la deuxième extrémité 820b se positionne en regard du boudin 411 parallèlement à la direction transversale Y, et préférentiellement entre le milieu et l'arrière du boudin 411.

En position rapprochée, la deuxième extrémité 820b arrive au contact du boudin 411 et elle comprime ledit boudin 411 dans un plan dépendant des composantes X et Y. Le comportement et l'intégrité du boudin 411 sont assurés du fait qu'il roule lors de la compression par la deuxième extrémité 820b. En positon rapprochée, la lamelle 800 vient donc en appui contre le boudin 411 et assure l'étanchéité au fluide et au feu.

Comme pour les autres modes de réalisation, la taille du joint 406 est réduite car les tolérances de réglages des verrous ne sont plus à considérer en totalité du fait que la composante en X réduit la composante en Y et l'effort nécessaire à la fermeture des capots est réduit.

Dans le mode de réalisation de l'invention présenté sur les Figs. 8 et 9, le plan de symétrie du boudin 411 qui est parallèle au plan XZ est décalé vers le premier capot 302 parallèlement à la direction transversale Y par rapport au plan de symétrie du pied 407 parallèle au plan XZ.

## Revendications

1. Turboréacteur (150) d'aéronef (100) présentant une direction longitudinale (X) et une direction transversale (Y) perpendiculaire à la direction longitudinale (X) et comportant :
- une structure,
- deux modules d'inversion de poussée (152) montés articulés sur la structure entre une position rapprochée et une position écartée,
où chaque module d'inversion de poussée (152) comporte un caisson extérieur (204) prenant globalement la forme d'un demi-cylindre centré sur la direction longitudinale (X), un caisson intérieur (202) prenant globalement la forme d'un demi-cylindre centré sur la direction longitudinale (X), logé à l'intérieur du caisson extérieur (204), et
- un système de fixation (400, 600, 800) assurant, pour chaque module d'inversion de poussée (152), la fixation du caisson intérieur (202) au caisson extérieur (204), et comportant :
- un premier capot (302) fixé entre le caisson intérieur (202) et le caisson extérieur (204) de l'un des modules d'inversion (152), et présentant un bord d'attaque (308),
- un deuxième capot (304) fixé entre le caisson intérieur (202) et le caisson extérieur (204) de l'autre des modules d'inversion (152),
où un logement (316) est ménagé entre le premier capot (302) et le deuxième capot (304) et délimité par une paroi de fixation (402) du premier capot (302) s'étendant perpendiculairement à la direction longitudinale (X) à l'arrière du bord d'attaque (308),
- un joint (406) comportant un pied (407) et un boudin (411) solidaire du pied (407) où le pied (407) est fixé dans le logement (316) à la paroi de fixation (402) et où le boudin (411) se projette depuis le pied (407) selon la direction longitudinale (X), et
- un moyen d'écrasement (450, 650, 850) solidaire du deuxième capot (304) et agencé pour écraser le boudin (411) vers la paroi de fixation (402) lorsque le deuxième capot (304) passe de la position écartée à la position rapprochée.

2. Turboréacteur (150) selon la revendication 1, **caractérisé en ce que** le système de fixation (400, 600) comporte en outre, une première lamelle (418) élastique avec une première extrémité (418a) fixée dans le logement (316) au premier capot (302), une deuxième extrémité (418b) libre et se projetant vers le deuxième capot (304), et, entre la première extrémité (418a) et la deuxième extrémité (418b), une zone plane (418c) globalement parallèle à la paroi de fixation (402), où le boudin (411) est en appui contre la zone plane (418c), et **en ce que** le moyen d'écrasement (450, 650) est un moyen de poussée (420, 620) solidaire du deuxième capot (304) et agencé pour déplacer la zone plane (418c) vers la paroi de fixation (402) lorsque le deuxième capot (304) passe de la position écartée à la position rapprochée.

3. Turboréacteur (150) selon la revendication 2, **caractérisé en ce que** le moyen de poussée (420) est une deuxième lamelle (420) avec une première extrémité (420a) fixée dans le logement (316) au deuxième capot (304), une deuxième extrémité (420b) libre se projetant vers le premier capot (302) et, entre la première extrémité (420a) et la deuxième extrémité (420b), une zone plane (420c) globalement parallèle à la paroi de fixation (402), où en position écartée, la première lamelle (418) est dans une position de repos, où la zone plane (420c) de la deuxième lamelle (420) est au niveau ou en avant de la zone plane (418c) de la première lamelle (418), où en position rapprochée, la première lamelle (418) est dans une position active dans laquelle elle est rapprochée de la paroi de fixation (402) par rapport à la position de repos, et la zone plane (420c) de la deuxième lamelle (420) est positionnée derrière et contre la zone plane (418c) de la première lamelle (418) par rapport au boudin (411).

4. Turboréacteur (150) selon la revendication 3, **caractérisé en ce que** la deuxième extrémité (418b) de la première lamelle (418) est courbée vers la paroi de fixation (402) et la deuxième extrémité (420b) de la deuxième lamelle (420) est courbée à l'opposé de la paroi de fixation (402).

5. Turboréacteur (150) selon la revendication 2, **caractérisé en ce que** le moyen de poussée (620) est une deuxième lamelle (620) avec une première extrémité (620a) fixée dans le logement (316) au deuxième capot (304), une deuxième extrémité (620b) libre se projetant vers le premier capot (302) et vers l'arrière du module d'inversion (152), et, entre la première extrémité (620a) et la deuxième extrémité (620b), une zone plane (620c) qui présente un angle aigu par rapport à la paroi de fixation (402), où en position écartée, la première lamelle (418) est dans une position de repos, où en position rapprochée, la première lamelle (418) est dans une position active dans laquelle elle est rapprochée de la paroi de fixation (402) par rapport à la position de repos, et où la zone plane (620c) de la deuxième lamelle (620) est positionnée de manière à entrer en contact avec la deuxième extrémité (418b) de la première lamelle (418) lors du passage de la position écartée à la position rapprochée.

6. Turboréacteur (150) selon la revendication 5, **caractérisé en ce que** la deuxième extrémité (418b) de la première lamelle (418) est courbée vers la paroi de fixation (402).

7. Turboréacteur (150) selon la revendication 1, **caractérisé en ce que** le moyen d'écrasement (850) est une lamelle (820) dont une première extrémité (820a) est fixée dans le logement (316) à l'intérieur de la deuxième paroi (312) du deuxième capot (304) et dont une deuxième extrémité (820b) est libre et se projette vers la première paroi (310) du premier capot (302), **en ce que** la deuxième extrémité (820b) est courbée à l'opposé de la paroi de fixation (402), et **en ce qu'**en position écartée, la deuxième extrémité (820b) se positionne en regard du boudin (411).

8. Turboréacteur (150) selon la revendication 7, **caractérisé en ce qu'**un plan de symétrie du boudin (411) est décalé vers le premier capot (302) par rapport à un plan de symétrie du pied (407).

9. Aéronef (10) comportant un turboréacteur (150) selon l'une des revendications précédentes.

## Patentansprüche

1. Triebwerk (150) eines Luftfahrzeugs (100) mit einer Längsrichtung (X) und einer Querrichtung (Y) senkrecht zur Längsrichtung (X), das Folgendes aufweist:
- eine Struktur,
- zwei Schubumkehrmodule (152), die zwischen einer angenäherten und einer entfernten Position drehbar an der Struktur angebracht sind,
wobei jedes Schubumkehrmodul (152) einen äußeren Kasten (204) aufweist, der insgesamt die Form eines Halbzylinders annimmt, der in der Längsrichtung (X) zentriert ist, und einen inneren Kasten (202), der insgesamt die Form eines Halbzylinders annimmt, der in der Längsrichtung (X) zentriert ist und sich innerhalb des äußeren Kastens (204) befindet, und
- ein Befestigungssystem (400, 600, 800), das für jedes Schubumkehrmodul (152) die Befestigung des inneren Kastens (202) am äußeren Kasten (204) sicherstellt und Folgendes aufweist:
- eine erste Abdeckung (302), die zwischen dem inneren Kasten (202) und dem äußeren Kasten (204) eines der Umkehrmodule (152) befestigt ist und eine Vorderkante (308) aufweist,
- eine zweite Abdeckung (304), die zwischen dem inneren Kasten (202) und dem äußeren Kasten (204) des anderen der Umkehrmodule (152) befestigt ist,
wobei eine Aufnahme (316) zwischen der ersten Haube (302) und der zweiten Haube (304) gebildet und durch eine Befestigungswand (402) der ersten Abdeckung (302) begrenzt wird, die sich senkrecht zur Längsrichtung (X) hinter der Vorderkante (308) erstreckt,
- ein Gelenk (406), das einen Fuß (407) und einen mit dem Fuß (407) fest verbundenen Wulst (411) aufweist, wobei der Fuß (407) in der Aufnahme (316) an der Befestigungswand (402) befestigt ist und wobei der Wulst (411) vom Fuß (407) in Längsrichtung (X) vorsteht, und
- ein Pressmittel (450, 650, 850), das fest mit der zweiten Haube (304) verbunden und so angeordnet ist, dass es den Wulst (411) in Richtung der Befestigungswand (402) presst, wenn die zweite Haube (304) von der entfernten Position in die angenäherte Position übergeht.

2. Triebwerk (150) nach Anspruch 1, **dadurch gekennzeichnet, dass** das Befestigungssystem (400, 600) darüber hinaus Folgendes aufweist: eine erste elastische Lamelle (418) mit einem ersten Ende (418a), das in der Aufnahme (316) an der ersten Haube (302) befestigt ist, einem zweiten Ende (418b), das frei ist und in Richtung der zweiten Haube (304) vorsteht, und zwischen dem ersten Ende (418a) und dem zweiten Ende (418b) eine ebene Zone (418c), die insgesamt parallel zur Befestigungswand (402) verläuft, wobei der Wulst (411) so an der ebenen Zone (418c) anliegt, dass das Pressmittel (450, 650) ein Schubmittel (420, 620) ist, das mit der zweiten Haube (304) fest verbunden und so angeordnet ist, dass es die ebene Zone (418c) zur Befestigungswand (402) hin verschiebt, wenn die zweite Haube (304) von der entfernten Position in die angenäherte Position übergeht.

3. Triebwerk (150) nach Anspruch 2, **dadurch gekennzeichnet, dass** das Schubmittel (420) eine zweite Lamelle (420) mit einem ersten Ende (420a) ist, das in der Aufnahme (316) an der zweiten Haube (304) befestigt ist, einem zweiten Ende (420b), das frei ist und in Richtung der ersten Haube (302) vorsteht, und zwischen dem ersten Ende (420a) und dem zweiten Ende (420b) eine ebene Zone (420c), die insgesamt parallel zur Befestigungswand (402) verläuft, wobei sich die erste Lamelle (418) in entfernter Position in einer Ruheposition befindet, wobei die ebene Zone (420c) der zweiten Lamelle (420) an oder vor der ebenen Zone (418c) der ersten Lamelle (418) liegt, wobei sich die erste Lamelle (418) in angenäherter Position in einer aktiven Position befindet, in der sie näher an der Befestigungswand (402) als in der Ruheposition liegt und die ebene Zone (420c) der zweiten Lamelle (420) hinter und gegen die ebene Zone (418c) der ersten Lamelle (418) in Bezug auf den Wulst (411) positioniert ist.

4. Triebwerk (150) nach Anspruch 3, **dadurch gekennzeichnet, dass** das zweite Ende (418b) der ersten Lamelle (418) zur Befestigungswand (402) hin gebogen ist und das zweite Ende (420b) der zweiten Lamelle (420) von der Befestigungswand (402) weg gebogen ist.

5. Triebwerk (150) nach Anspruch 2, **dadurch gekennzeichnet, dass** das Schubmittel (620) eine zweite Lamelle (620) mit einem ersten Ende (620a) ist, das in der Aufnahme (316) an der zweiten Haube (304) befestigt ist, einem zweiten Ende (620b), das frei ist und in Richtung der ersten Haube (302) und zur Rückseite des Umkehrmoduls (152) hin vorsteht, und zwischen dem ersten Ende (620a) und dem zweiten Ende (620b) eine ebene Zone (620c), die einen spitzen Winkel in Bezug auf die Befestigungswand (402) aufweist, wobei sich die erste Lamelle (418) in entfernter Position in einer Ruheposition befindet, wobei sich die erste Lamelle (418) in angenäherter Position in einer aktiven Position befindet, in der sie näher an der Befestigungswand (402) als in der Ruheposition liegt, und wobei die ebene Zone (620c) der zweiten Lamelle (620) so positioniert ist, dass sie das zweite Ende (418b) der ersten Lamelle (418) berührt, wenn sie von der entfernten Position in die angenäherte Position übergeht.

6. Triebwerk (150) nach Anspruch 5, **dadurch gekennzeichnet, dass** das zweite Ende (418b) der ersten Lamelle (418) zur Befestigungswand (402) hin gebogen ist.

7. Triebwerk (150) nach Anspruch 1, **dadurch gekennzeichnet, dass** das Pressmittel (850) eine Lamelle (820) ist, deren erstes Ende (820a) in der Aufnahme (316) innerhalb der zweiten Wand (312) der zweiten Haube (304) befestigt ist und deren zweites Ende (820b) frei ist und in Richtung der ersten Wand (310) der ersten Haube (302) vorsteht, und dass das zweite Ende (820b) von der Befestigungswand (402) weg gebogen ist, und dass sich das zweite Ende (820b) in der entfernten Position gegenüber dem Wulst (411) positioniert.

8. Triebwerk (150) nach Anspruch 7, **dadurch gekennzeichnet, dass** eine Symmetrieebene des Wulstes (411) in Richtung der ersten Haube (302) in Bezug auf eine Symmetrieebene des Fußes (407) versetzt ist.

9. Luftfahrzeug (10) mit einem Triebwerk (150) nach einem der vorhergehenden Ansprüche.

## Claims

1. Turbojet engine (150) of an aircraft (100) having a longitudinal direction (X) and a transverse direction (Y) perpendicular to the longitudinal direction (X) and comprising:
- a structure,
- two thrust reverser modules (152) pivotably mounted on the structure between a close-together position and a spaced-apart position,
wherein each thrust reverser module (152) comprises an outer casing (204) generally in the form of a half-cylinder centred on the longitudinal direction (X), an inner casing (202) generally in the form of a half-cylinder centred on the longitudinal direction (X), housed inside the outer casing (204),
and
- a securing system (400, 600, 800) for securing, for each thrust reverser module (152), the inner casing (202) to the outer casing (204), and comprising:
- a first hood (302) secured between the inner casing (202) and the outer casing (204) of one of the reverser modules (152), and having a leading edge (308),
- a second hood (304) secured between the inner casing (202) and the outer casing (204) of the other of the reverser modules (152),
wherein a housing (316) is formed between the first hood (302) and the second hood (304) and delimited by a securing wall (402) of the first hood (302) extending perpendicularly to the longitudinal direction (X) at the rear of the leading edge (308),
- a seal (406) comprising a foot (407) and a sausage (411) rigidly secured to the foot (407), wherein the foot (407) is secured in the housing (316) to the securing wall (402) and wherein the sausage (411) protrudes from the foot (407) in the longitudinal direction (X), and
- a crushing means (450, 650, 850) rigidly secured to the second hood (304) and arranged to crush the sausage (411) towards the securing wall (402) when the second hood (304) goes from the spaced-apart position to the close-together position.

2. Turbojet engine (150) according to Claim 1, **characterized in that** the securing system (400, 600) further comprises a first elastic strip (418) with a first end (418a) secured in the housing (316) to the first hood (302), a second end (418b) which is free and protrudes towards the second hood (304), and, between the first end (418a) and the second end (418b), a flat area (418c) generally parallel to the securing wall (402), wherein the sausage (411) bears against the flat area (418c), and **in that** the crushing means (450, 650) is a pushing means (420, 620) rigidly secured to the second hood (304) and arranged so as to move the flat area (418c) towards the securing wall (402) when the second hood (304) goes from the spaced-apart position to the close-together position.

3. Turbojet engine (150) according to Claim 2, **characterized in that** the pushing means (420) is a second strip (420) with a first end (420a) secured in the housing (316) to the second hood (304), a second free end (420b) protruding towards the first hood (302) and, between the first end (420a) and the second end (420b), a flat area (420c) generally parallel to the securing wall (402), wherein in the spaced-apart position, the first strip (418) is in a rest position, wherein the flat area (420c) of the second strip (420) is level with or in front of the flat area (418c) of the first strip (418), wherein in the close-together position, the first strip (418) is in an active position in which it is closer to the securing wall (402) than in the rest position, and the flat area (420c) of the second strip (420) is positioned behind and against the flat area (418c) of the first strip (418) relative to the sausage (411).

4. Turbojet engine (150) according to Claim 3, **characterized in that** the second end (418b) of the first strip (418) is curved towards the securing wall (402) and the second end (420b) of the second strip (420) is curved away from the securing wall (402).

5. Turbojet engine (150) according to Claim 2, **characterized in that** the pushing means (620) is a second strip (620) with a first end (620a) secured in the housing (316) to the second hood (304), a second free end (620b) protruding towards the first hood (302) and towards the rear of the reverser module (152), and, between the first end (620a) and the second end (620b), a flat area (620c) which has an acute angle relative to the securing wall (402), wherein in the spaced-apart position, the first strip (418) is in a rest position, wherein in the close-together position, the first strip (418) is in an active position in which it is closer to the securing wall (402) than in the rest position, and wherein the flat area (620c) of the second strip (620) is positioned so as to come into contact with the second end (418b) of the first strip (418) when going from the spaced-apart position to the close-together position.

6. Turbojet engine (150) according to Claim 5, **characterized in that** the second end (418b) of the first strip (418) is curved towards the securing wall (402).

7. Turbojet engine (150) according to Claim 1, **characterized in that** the crushing means (850) is a strip (820) a first end (820a) of which is secured in the housing (316) inside the second wall (312) of the second hood (304) and a second end (820b) of which is free and protrudes towards the first wall (310) of the first hood (302), **in that** the second end (820b) is curved away from the securing wall (402), and **in that** in the spaced-apart position, the second end (820b) is positioned facing the sausage (411).

8. Turbojet engine (150) according to Claim 7, **characterized in that** a plane of symmetry of the sausage (411) is offset towards the first hood (302) relative to a plane of symmetry of the foot (407).

9. Aircraft (100) comprising a turbojet engine (150) according to one of the preceding claims.
